# EUROPEAN PATENT SPECIFICATION

(11) **EP 2 926 761 B1**
(45) Date of publication and mention of the grant of the patent: **02.06.2021**
(21) Application number: 10789025.3
(22) Date of filing: 06.05.2010
(51) Int. Cl.: A61C 7/00, A61C 7/18, A61C 7/20

(54) **DEVICE FOR CORRECTING THE POSITION OF TEETH**
VORRICHTUNG ZUR POSITIONSKORREKTUR DER ZÄHNE
DISPOSITIF DESTINÉ À CORRIGER LA POSITION DES DENTS

(30) Priority: 16.06.2009 ES 200901420
(43) Date of publication of application: 07.10.2015
(73) Proprietor: Geniova Technologies, S.L., 28037 Madrid (ES)
(72) Inventor: JIMÉNEZ CARABALLO, Santiago, 28037 Madrid (ES)
(74) Representative: Garrido Pastor, José Gabriel
(86) International application number: PCT/ES2010/000201
(87) International publication number: WO 2010/146192

(56) References cited:
- US-A- 2 379 011
- US-A- 3 302 288
- US-A- 4 209 906
- US-A- 4 209 906
- US-A- 4 592 725
- US-A- 4 655 708
- US-B1- 6 217 322

## Description

### Technical Field

This invention refers to a removable tooth position corrective appliance which comprises of a set of caps where a bracket or tubes are attached to the caps. A highly resistant memory wire runs through the tubes to align teeth. Therefore, this invention falls under the orthodontic sector, in particular to obtain or maintain the desired position of the teeth for hardening, leveling and alignment.

### Background Art

Documents in the art, in which bands are used instead of caps, are exemplified by US 4 592 725 A, US 4 209 906 A, US 3 302 288 A and US 2 379 011 A.

Within the state of the technique, there are various known appliances based on brackets that are connected by adhesives to the teeth which align the teeth with the help of a highly resistant memory wire. The operation of these appliances is based on the wire being shaped like the desired dental arch so it places force on the brackets once inserted into them which is transmitted to the teeth, gradually moving the teeth to the desired position. All of these appliances show problems including the discomfort caused in the patient's mouth, hygiene problems due to the difficulty of keeping them clean particularly after eating as well as aesthetic problems.

Several solutions have been sought to solve these problems. To limit the negative impact on a person's image, appliances have been invented such as the well-known invisible aligner which is based on a set of transparent and plastic sheaths or trays that are somewhat elastic which are inserted to cover the teeth. The trays push the teeth to a desired position which is established by the shape of the tray and the constant force placed on the teeth. When the teeth have moved because of the action of the trays and the tray no longer puts pressure on them, the tray has to be exchanged for another one that continues pushing the teeth to the desired position. This method is particularly useful for position corrections that involve minor movement- less than 0.5 millimeters. But it is expensive and requires long periods of time for larger movements. Moreover as indicated in Spanish patent 2,258,939 "it is expensive as it requires a complete simulation of the intermediate positions of the teeth during the movement of all of the teeth before the sheaths can be produced, it requires manufacturing a considerable number of sheaths for various intermediate dental movement stages and it also requires frequent visits to the orthodontist to verify the movement of the teeth and change the sheaths. This method and these appliances also do not stimulate bone growth meaning the results are limited".

Another solution is presented in the Spanish patent published under the number 2,258,939. It shows an orthodontic appliance comprised of two sheaths or teeth trays where each sheath has at least one long element made of a flexible material. Each one of the long elements is fixed at one end to the corresponding tray with the other end free. A spring joins the long elements to each other through the ends. The long element is usually an archwire made of stainless steel or another metal and exercises active functions such as pressure against the gums or teeth or passive functions such as uniting or transmitting to the sheath to act on the position of the teeth.

Notwithstanding, the above solutions do not solve the problem of finding an appliance:
1. that improves the position of a patient's teeth in a short period of time.
2. where the cost of the treatment is less.
3. The appliance used does not produce discomfort or possible mouth wounds.

### Summary of invention

This invention refers to a user-removable appliance as defined in claim 1. It aims to answer the problems above based on a personal dental arch corrective appliance that allows the patient to put it on or take it off quickly while at the same time improving the alignment of the teeth in a short period of time. To do so, the appliance subject of this patent is based on combining the use of the bracket and highly resistant wire technique with the use of tooth caps or trays. The brackets are attached to the individual caps which are then anchored to the patient's teeth. The highly resistant wire which pre-memorizes the patient's ideal dental arch, exercises constant force on the brackets which is transmitted to the corresponding caps which then transmit this to the teeth, producing the corresponding correction.

The memory of the wire is established by the material with which it is made and industry uses steel and particularly nickel-titanium to build these wires so they may be used in orthodontics.

The purpose of this invention is to improve the positioning of the teeth, especially in adults, and when the teeth must move a long distance; in other words, more than 0.5 millimeters because more specific techniques such as invisible aligners can be used for minor adjustments. This technique allows adults to remove the appliance by themselves and quickly.

A large pan of the current teeth position correction technique is only based on the use of brackets which are glued directly to the teeth and later joined with highly resistant memory wire which exercises continuous force on the teeth through the brackets. This way, each one of the dental pieces is moved to the desired position. Therefore, this technique means the brackets must be opened in order to insert the wire inside the brackets once they are attached to the teeth and it is not possible to use closed appliances such as buccal tubes.

The corrective appliance which is the subject matter of this patent is comprised of a set of independent caps which can be fitted to a single tooth or a set of teeth. A bracket or tube is attached to the individual caps that are to be fitted to the teeth to correct their position. The caps can be anchored to a single tooth or to various teeth which is often the case with molars. In this latter case, only a bracket or tube is included to fit the wire through as it serves as a support point for the teeth and so that the wire can apply force to the teeth to be moved as this appliance applies its corrective function to the teeth.

This invention improves the current situation as it makes it possible to use not only brackets but also tubes as in this case, the wire is inserted inside the tubes or brackets attached to the set of caps before it is inserted into the patient's mouth.

Just like the trays used in orthodontics, the caps are placed in the mouth with the patient's own hands and they can be removed easily without any special technique. The caps are made of a highly resistant, elastic material such as hard plastic or plexiglass so that they adapt to the geometry of the teeth when fixed to each tooth or set of teeth and place sufficient pressure so they remain immobile on them. When this appliance is not fitted to the teeth, each one of the caps can be moved along the wire. In other words, the position of the caps and the force placed in the necessary direction by the wire are established when it is placed in the mouth. When out of the mouth, the caps move freely along the wire through the brackets or tubes. Furthermore, this appliance can be worn in the mouth or stored in a box.

### Brief description of drawings

7 figures are presented to better understand the invention:
Figure 1 and 2 show a section view of the ensemble of the tooth, cap and bracket.
Figure 3 shows a section view of the ensemble of the tooth, cap and round tube.
Figure 4 shows a cap with a straight tube.
Figure 5 shows the ensemble of the bracket, tubes, caps and wire.
Figures 6 and 7 show a top view and a section view of a straight tube Description of embodiments

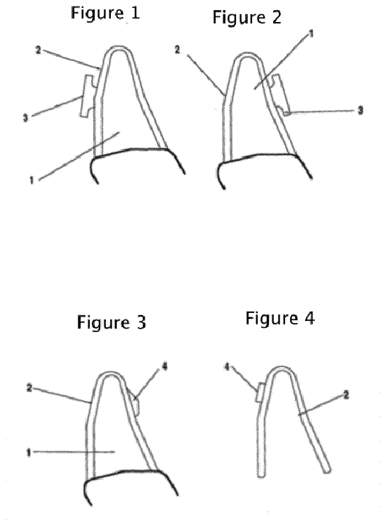

Figure 1 shows a section view of a cover or cap (2) anchored to a specific tooth (1) and how the outer part of the cap (2) is glued to a bracket (3) through which a highly resistant memory wire (5) like those made of nickel-titanium will run. This way, the bracket (2) and the wire (5) are situated in a vestibular position and are easier to see.

Nonetheless, some people do not believe brackets (2) or any other apparatus they may wear to improve the position of their teeth are attractive. To solve this problem and improve patient aesthetics, the bracket (3) can be stuck to the inside of the cap (2). This way, the wire (5) as well as the brackets are situated in the lingual area meaning they are not in plain sight and only the cap (2) would be exposed which is not as visible.

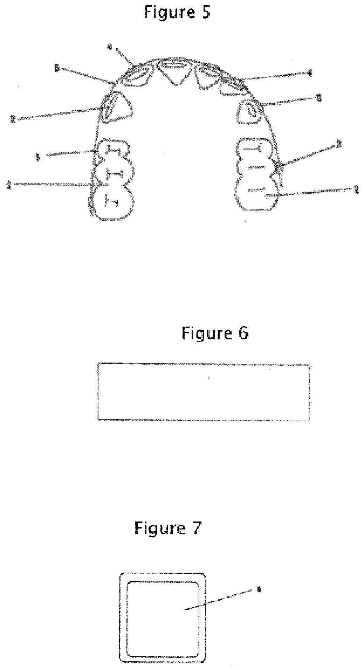

Figure 5 shows how this tooth alignment corrective appliance is comprised of a set of independent caps (2) which can be fitted to a single tooth (1) or a set of teeth. A bracket (3) or tube (4) is attached to the individual caps that are to be fitted to the teeth to correct their position. The caps (2) can be anchored to a single tooth or to various teeth which is often the case with molars as shown in the figure. In this latter case, only a bracket (3) or tube (4) is included to fit the wire (5) through as it serves as a support point for the teeth and so that the wire can apply force to the teeth to be moved.

As indicated above, the caps (2) are built of a highly resistant, elastic material such as those habitually used in orthodontics - in other words, hard plastic or plexiglass. When the caps are fixed to each tooth (1) or set of teeth (1), they place sufficient pressure so they remain immobile on them. When this appliance is not fitted to the teeth, each one of the caps (2) can be freely moved along the wire (5) through the brackets (3) or tubes (4). In other words, the position of the caps and the force applied by the wire (6) in the necessary direction are established when it is placed in the mouth.

On the other hand, if the position of only a single tooth is going to be modified, it will be necessary to anchor one cap (2) to the tooth in question. A bracket (3) or light tube (4) is attached to said cap (2). Moreover, two support points are needed to place force on the cap (2) and the tooth. This is achieved by including another two caps with their corresponding brackets (3) or tubes (4). These support caps can be anchored to a single tooth (1) or to various teeth, generally the molars.

This invention makes it possible to use brackets (3), simpler and safer systems like tubes (4) as in this case, the wire (5) is inserted inside the tubes (4) or brackets (3) attached to the set of caps before it is inserted into the patient's mouth. When the appliance is placed in the mouth, it adapts and fixes to the mouth and places the corrective forces.

Figure 3 shows the section of a tooth (1) to which a sheath (2) is anchored and how a light tube (4) with gentle curves to prevent wounds and tongue problems is included on the inner or lingual part. This is another improvement in relation to brackets (3) which feature a harsher geometry in the form of a "T" with bands that create friction and wounds in the mouth.

Notwithstanding, this type of appliance can use brackets (3) or tubes (4) with the possibility of including the two devices - brackets (3) and tubes (4) in a single appliance.

### Industrial applicability

This invention applies to the health sciences industry, in particular the orthodontics sector.

Reference signs list
tooth (1)
cover or sheath (2) anchored to a specific
bracket (3)
tube (4)
memory wire (5)

## Claims

1. A user-removable appliance to correct the position of the teeth, comprising a set of independent removable caps (2) made of a highly resistant, elastic material such as hard plastic or plexiglass, said caps being adapted to be fitted to each tooth or a set of teeth and adapt to the geometry of the teeth as they are fitted, said caps (2) having a bracket (3) or a tube (4) attached to the individual caps on the outer/vestibular side or inner/lingual side, through which a high memory wire made of nickel-titanium or similar runs.

2. Appliance according to claim 1, wherein, when said appliance is out of the mouth, the caps (2) can move freely along the high memory wire (5) through the brackets (3) or the tubes (4).

## Patentansprüche

1. Vom Benutzer entfernbares Gerät zum Korrigieren der Position der Zähne, umfassend einen Satz unabhängiger entfernbarer Kappen (2) aus einem hochbeständigen, elastischen Material wie Hartplastik oder Acrylglas, wobei die Kappen so angepasst sind, dass sie an jeden Zahn oder an jede Zahnreihe angepasst werden können, und zum Anpassen an die Geometrie der Zähne während der Anpassung, wobei die Kappen (2) eine Halterung (3) oder eine Röhre (4) aufweisen, die an den einzelnen Kappen auf der äußeren/vestibulären Seite oder der inneren/lingualen Seite angebracht ist, durch die ein Memory-Draht aus Nickel-Titan oder ähnlichem verläuft.

2. Gerät nach Anspruch 1, wobei sich die Kappen (2), wenn sich das Gerät außerhalb des Mundes befindet, frei entlang des Memory-Drahts (5) durch die Halterungen (3) oder die Röhren (4) bewegen können.

## Revendications

1. Appareil amovible par l'utilisateur pour corriger la position des dents, comprenant un ensemble de capuchons amovibles indépendants (2) constitués d'un matériau élastique hautement résistant tel que du plastique dur ou du plexiglas, lesdits capuchons étant adaptés pour être montés sur chaque dent ou un ensemble de dents et s'adapter à la géométrie des dents au fur et à mesure de leur mise en place, lesdits capuchons (2) comportant un bracket (3) ou un tube (4) fixé aux capuchons individuels du côté externe/vestibulaire ou du côté interne/lingual, à travers lequel passe un fil à haute mémoire en nickel-titane ou similaire.

2. Appareil selon la revendication 1, dans lequel, lorsque ledit appareil est hors de la bouche, les capuchons (2) peuvent se déplacer librement le long du fil à haute mémoire (5) à travers les brackets (3) ou les tubes (4).
